# EUROPÄISCHE PATENTANMELDUNG

(11) **EP 4 245 816 A1**
(43) Veröffentlichungstag der Anmeldung: **20.09.2023**
(21) Anmeldenummer: 23162533.6
(22) Anmeldetag: 17.03.2023
(51) Int. Cl.: C09D 5/16, A01N 25/10, A01N 43/50, C08F 226/06, C08F 246/00, C09D 11/00

(54) **POLYMERISIERBARE ADDITIVE UND ZUBEREITUNGEN, DIE DIESE ENTHALTEN**

(30) Priorität: 17.03.2022 DE 102022106315
(71) Anmelder: Hochschule Niederrhein, 47805 Krefeld (DE); Pensionaris Beheer BV, 4207 HC Gorinchem (NL)
(72) Erfinder: STREHMEL, Veronika, 47798 Krefeld (DE); NICKISCH-HARTFIEL, Anna, 47839 Krefeld (DE); HEINZ, Markus, 47798 Krefeld (DE); SANAY, Berran, Dublin, D04 X725 (IE); SCHICK, Joachim, 47877 Willich (DE); STREHMEL, Bernd, 47798 Krefeld (DE); BERGMANN, Andree, 4205 PJ Gorinchem (NL)
(74) Vertreter: Fabry, Bernd

(57) **Zusammenfassung**

Vorgeschlagen werden polymerisierbare ionische Flüssigkeiten als Additive zur Herstellung von Zubereitungen mit antimikrobieller Ausrüstung.

## Beschreibung

### GEBIET DER ERFINDUNG

Die Erfindung befindet sich auf dem Gebiet der Beschichtungen und betrifft neue Zubereitungen, insbesondere Oberflächenüberzüge und Druckfarben, welche über verbesserte antimikrobielle Eigenschaften verfügen, ein Verfahren zur Herstellung dieser Beschichtungen sowie die Verwendung spezieller Copolymere zur Herstellung antimikrobieller Beschichtungen einschließlich Druckfarben.

### TECHNOLOGISCHER HINTERGRUND

Eine Vielzahl von Infektionskrankheiten wird über Oberflächen beispielsweise in öffentlichen Gebäuden aber auch über Verpackungen im Lebensmittelbereich übertragen. Nicht umsonst gehört daher die Handdesinfektion zu den wichtigsten Vorsichtsmaßnahmen für den Schutz gegen Covid-19.

Um Infektionen entgegenzuwirken werden den unterschiedlichsten Arten von Beschichtungen, wie beispielsweise Lacken, aber auch Druckfarben, die auf Lebensmittelverpackungen aufgebracht werden, antimikrobielle Wirkstoffe zugesetzt. Solche Zubereitungen eignen sich ideal für Einrichtungen mit hohen Hygienestandards wie Krankenhäuser, Schulen, Kindergärten und Seniorenheime, um die Keimbesiedlung auf Oberflächen zu verringern. Antimikrobielle Beschichtungen können zum Beispiel auf Türgriffen, Armstützen, Geländern, Armaturen, Lüftungsöffnungen, Möbeln und Wänden aufgetragen werden, die alle als Träger für Keime dienen. Studien haben gezeigt, dass durch antimikrobielle Oberflächen die Anzahl der Infektionen um bis zu 60 Prozent reduziert werden konnte. Durch die Vermeidung von Infektionskrankheiten lassen sich aber auch unter anderem medizinische Kosten sowie Kosten für Arbeitgeber aufgrund von Personalabwesenheiten einsparen.

Lacke und (Druck-)Farben mit antimikrobiellen Eigenschaften sind aus dem Stand der Technik hinlänglich bekannt. Typischerweise werden den Zubereitungen entsprechende Wirkstoffe beigemischt, wobei diese die Norm ISO 22196 erfüllen müssen, d.h. innerhalb von 24 Stunden muss die vorgegebene Keimlast um 99 % vermindert werden.

Beispiele für geeignete antimikrobielle Zusatzstoffe umfassen in der Regel Schwermetallverbindungen, wie beispielsweise Silberphosphatglas (Fa. Teknos), welches der Lackzusammensetzung zugefügt wird. Die Mitverwendung von Schwermetallen ist jedoch aus umweltrechtlichen und toxikologischen Gründen bedenklich und daher unerwünscht. Ferner gibt es Hersteller, speziell für die Verpackung von Lebensmittel, die anderen Wegen folgen. Die Firma Wipf bietet z.B. Druckfarben an, welche Katalysatoren für die Erzeugung von Singulett-Sauerstoff enthalten und setzt darauf, dass die Keime durch den hochreaktiven Sauerstoff abgetötet werden. Das Verfahren erweist sich in der Praxis jedoch als unsicher, zumal die Photokatalysatoren selbst chemisch instabil sind.

### RELEVANTER STAND DER TECHNIK

Aus der EP 0937126 B1 (BASF) ist die Verwendung von Polymerisaten, die mindestens 5 Mol-% quaternisierte 1-Vinylimidazol-Einheiten der Formel 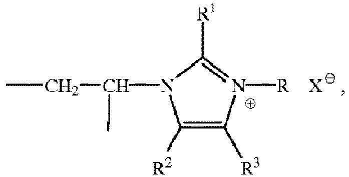 enthalten, als farbfixierenden Zusatz zu Wäschenachbehandlungsmitteln und zu Waschmitteln bekannt.

Gegenstand der WO 2003 085009 A1 (DEGUSSA) sind kationische Polymere mit cyclischen nichtaromatischen Einheiten, die eine Amidinium-Gruppe enthalten, wobei die cyclischen nichtaromatischen Einheiten, die eine Amidinium-Gruppe enthalten, (i) in der Hauptkette des Polymers oder (ii) in den Seitenketten des Polymers, wobei es sich in diesem Falle bei dem Polymer weder um ein Vinylpolymer, ein Polyglykosid oder ein Polyorganosiloxan handelt, oder (iii) sowohl in der Hautkette als auch in den Seitenketten angeordnet sind

Die WO 2018 226614 A1 (PENN STATE UNIV) bezieht sich auf neue mit Wirkstoffen beladene Partikel, die eine anionische Polymermatrix und ein kationisches Polymer umfassen, welche durch elektrostatische Anziehungskräfte zusammengehalten werden.

In der Dissertation von *Kaestner* mit dem Titel "Neue Polymermaterialien auf der Basis von funktionalisierten ionischen Flüssigkeiten zur potentiellen Anwendung in Membranen" wird die Synthese polymerisierbarer ionischer Monomere und deren Polymerisation behandelt.
(https://publishup.uni-potsdam.de/opus4-ubp/frontdoor/deliver/index/docld/50940/file/kaestner diss.pdf).

Aus den Veröffentlichungen "Imidazolium-based polyionic liquid absorbents for bioproduct recovery" in Green Chem., 2017,19, S. 5203-5213 sowie "Polymerization of vinylpyridinium salts. XIII. Preparation of 4-vinyl-N-methylpyridinium p-styrenesulfonate charge transfer ion-pair comonomer" in J. Polym. Sci.: Polym. Lett. Ed. 23, S. 655-659 und "Application of ionic liquids in synthesis of polymeric binders for coatings in Progr. Org. Coat 89, S. 297-313 (2015**)** sind Copolymerisate aus Styrensulfonate - AlkylVinylimidazolium bekannt, welche radikalisch polymerisiert werden, und antimikrobielle Eigenschaften aufweisen. Die Copolymeren enthalten jedoch zwei unterschiedliche Komponenten, wobei es sich einmal um das Vinylimidazolium zusammen mit einem anderen oder zum anderen um das Styrensulfonat zusammen mit einem anderen Kation handelt. Der Nachteil dieser Zusammensetzung besteht darin, dass die jeweiligen Gegenionen zum Vinylimidazolium bzw. zum Styrensulfonat nach der Reaktion der beiden Monomeren ein weiteres Salz bilden, welches migrieren und ausgewaschen werden kann.

### ZU LÖSENDE AUFGABE

Die Aufgabe der vorliegenden Erfindung hat daher zum einen darin bestanden, ein radikalisch polymerisierbares Additiv zur Verfügung zu stellen, welches bei Einarbeitung in eine ebenfalls radikalisch polymerisierbare Beschichtung oder Druckfarbe diese antimikrobiell ausrüstet. Das Additiv sollte dabei sowohl migrationsfest als auch wasserbeständig sein. Zudem sollte das Additiv frei von Schwermetallen sein.

### BESCHREIBUNG DER ERFINDUNG

In einer ersten Ausführungsform betrifft die Erfindung Additive enthaltend oder bestehend aus mindestens einem radikalisch polymerisierbaren Kation der Formel (I) und mindestens einem radikalisch polymerisierbaren Anion der Formel (II), 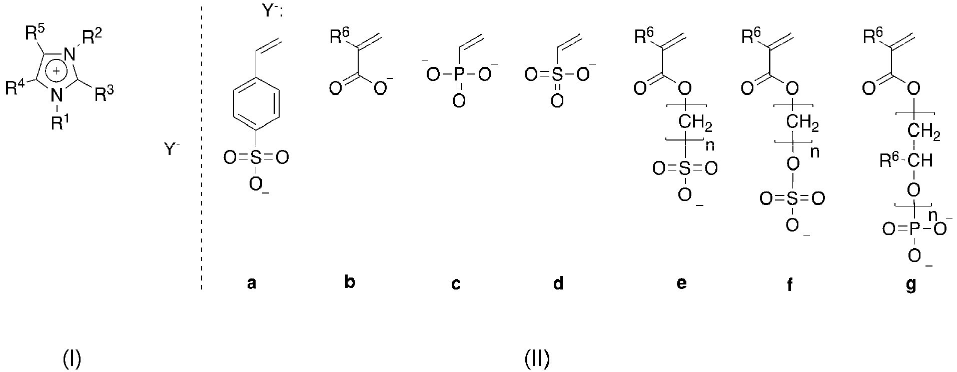 wobei
das polymerisierbare Kation I eine der abgebildeten Strukturen mit den Substituenten R¹-R⁵ oder eine Mischung aus diesen darstellen kann,
das polymerisierbare Anion II mit der generellen Formel Y⁻ eine der abgebildeten Strukturen a bis g oder auch eine Mischung daraus darstellen kann,
und die aufgeführten Substituenten jeweils unabhängig voneinander die folgenden Bedeutungen aufweisen können:

| | |
|---|---|
| R1, R2 | ein linearer oder verzweigter, gesättigten oder ungesättigten, gegebenenfalls durch mindestens eine Hydroxyl-, Carboxyl- und/oder Estergruppe substituierten C₅-C₂₅-Kohlenwasserstoffrest; oder |
| | ein gegebenenfalls mit mindestens einem linearen oder verzweigten, gesättigten oder ungesättigten C₁-C₁₀ Kohlenwasserstoffrest substituierter Phenyl- oder Benzylrest; oder |
| | ein -(CH₂)ₘ₁-COX-(CH₂)ₘ₂-OY-Rest |
| m1, m2 | Zahlen von 1 bis 5 |
| Y | ein linearer oder verzweigter, gesättigte oder ungesättigter C1-C20-Kohlenwasserstoffrest; oder |
| | ein gegebenenfalls mit mindestens einer C₁-C₅-Alkyl- oder Hydroxyalkylgruppe substituierter Phenyl-, Benzyl oder Furfurylrest; |
| R³, R⁴, R⁵ | Wasserstoff oder für einen linearen oder verzweigten C₁-C₁₂- Alkyl- oder Alkylarylrest mit 1 bis12 Kohlenstoffatomen, wobei R⁴ und R⁵ gegebenenfalls ein weiteres aromatisches Ringsystem bilden können. |
| R6 | Wasserstoff oder eine Methylgruppe |
| n | Zahlen ab 1 und größer |

Überraschenderweise wurde gefunden, dass das erfindungsgemäße Additiv problemlos beispielsweise in eine Beschichtungs- oder Druckfarbenformulierung eingearbeitet und mit dieser zusammen einer radikalischen Polymerisation unterworfen werden kann. Im Verlauf der Polymerisation werden sowohl die anionischen als auch die kationischen Komponenten in die Polymerkette eingebunden, wodurch eine Zubereitung mit antimikrobieller Ausrüstung erhalten wird, die insbesondere poly-ILs mit cytotoxischen Eigenschaften aufweist. Mit derartigen Zubereitungen beschichte Oberflächen, wie beispielsweise Türgriffe oder Lebensmittelverpackungen, werden keimfrei gehalten. Insbesondere erweisen sich entsprechende Lacke oder Druckfarben als wirksam gegen Keime wie *E. coli, S. aureus, C. albicans* sowie Noroviren und SARS Covid-19. Die antimikrobiellen Additive erweisen sich nach der radikalischen Polymerisation als migrationsfest und lassen sich auch nicht auswaschen. Sie sind ferner frei von Schwermetallen.

### Additive

Die erfindungsgemäßen Additive der Formeln (I) und (II) 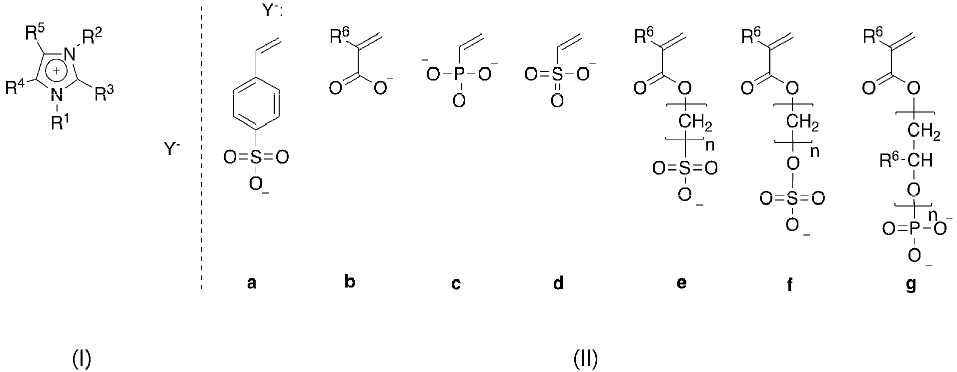 stellen polymerisierbare ionische Flüssigkeiten dar. Durch Einsatz verschiedener organischer Anionen und Kationen können die physikalisch-chemischen Eigenschaften einer ionischen Flüssigkeit in weiten Grenzen variiert und auf technische Anforderungen hin optimiert werden. Neben dem Schmelzpunkt lässt sich so die Löslichkeit von zum Beispiel homogenen Katalysatoren, Produkten oder Edukten in der ionischen Flüssigkeit beeinflussen. Die für Salze untypischen niedrigen Schmelzpunkte werden durch die räumliche Ausdehnung der lonen und durch Ladungsdelokalisierung in Anion und Kation erreicht. Bereits geringe thermische Energie genügt daher, um die Gitterenergie zu überwinden und die feste Kristallstruktur aufzubrechen.

Sowohl die anionische als auch die kationische Komponente der erfindungsgemäßen Additive sind nach den üblichen Verfahren der organischen präparativen Chemie erhältlich. Der Vinylimidazol-Grundkörper des Kations kann beispielsweise nach Reppe durch Umsetzung von Imidazol mit Acetylen erhalten werden, der Styrolsulfonsäure-Grundkörper des Anions durch Sulfonierung von Styrol mit gasförmigem Schwefeltrioxid.

Vorzugsweise sind die beiden Komponenten (I) und (II) im Additiv im molaren Verhältnis von etwa 1:2 bis etwa 2:1 und insbesondere etwa 1:1 enthalten.

In der nachfolgenden Tabelle I sind besonders bevorzugte Additive wiedergegeben:

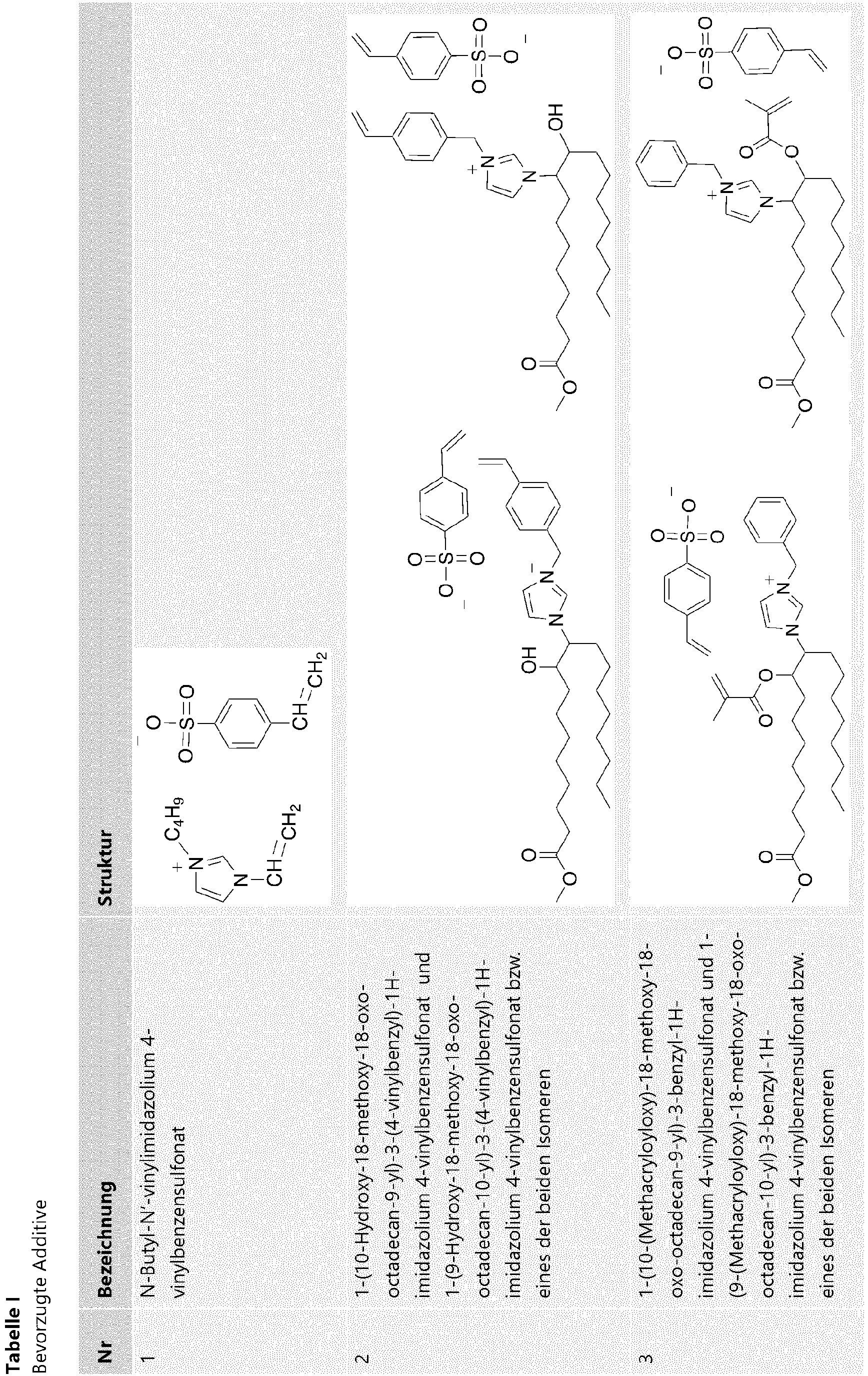

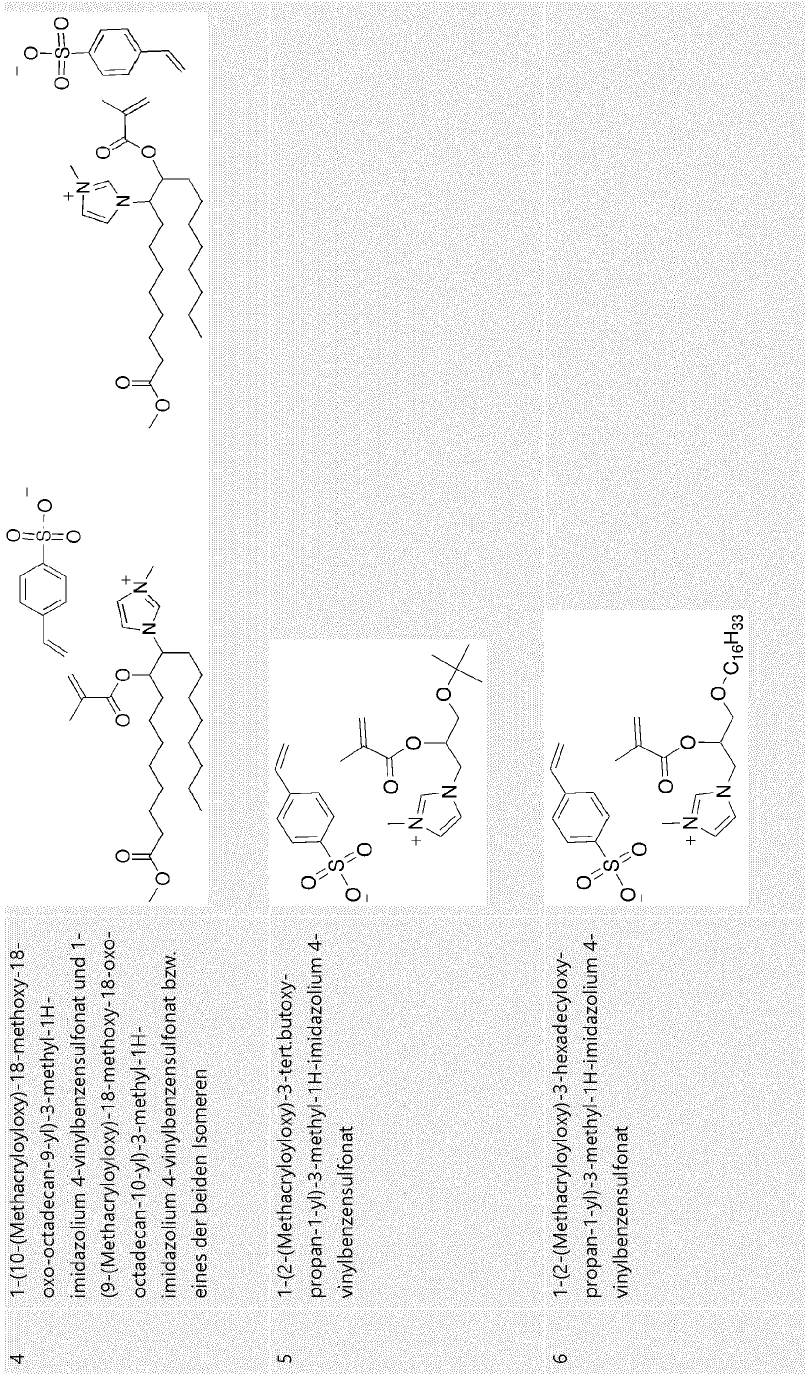

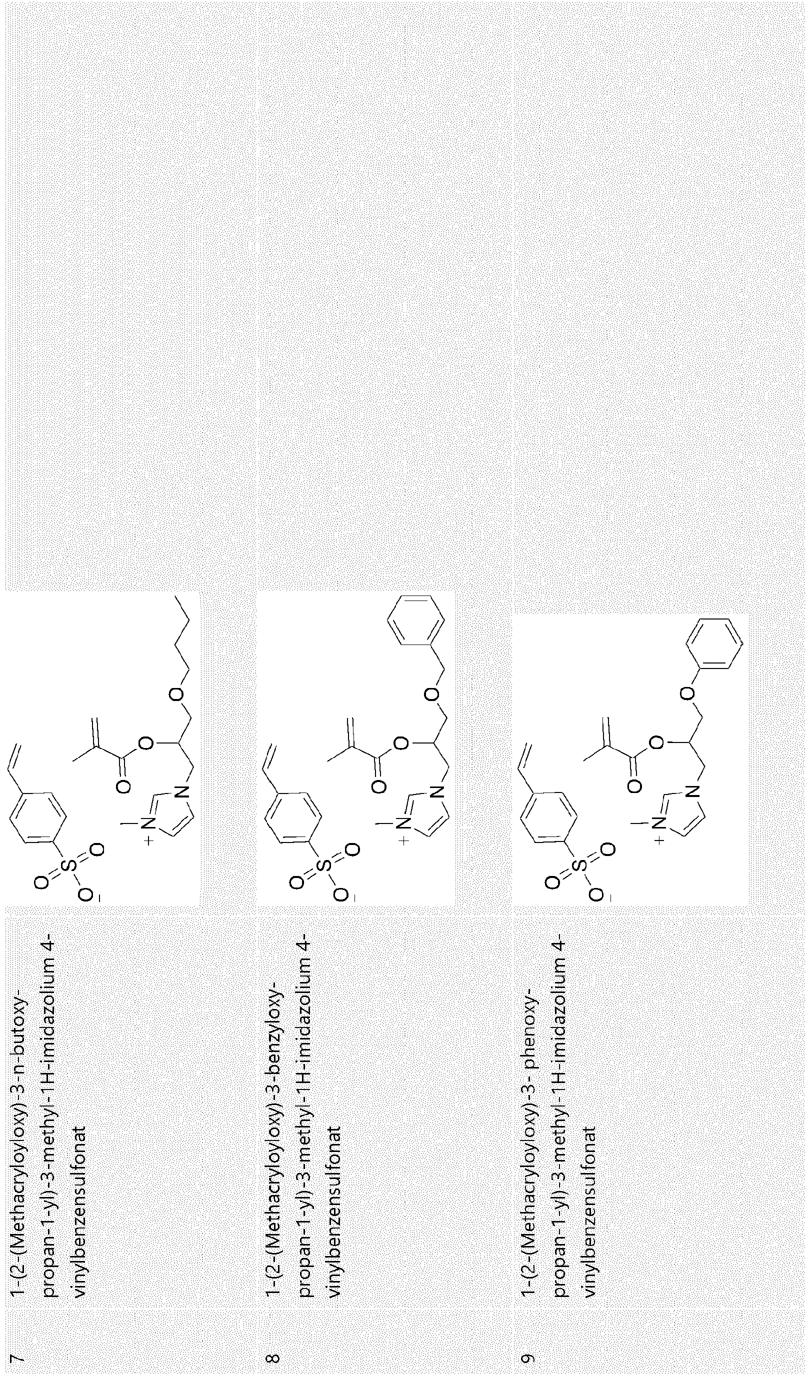

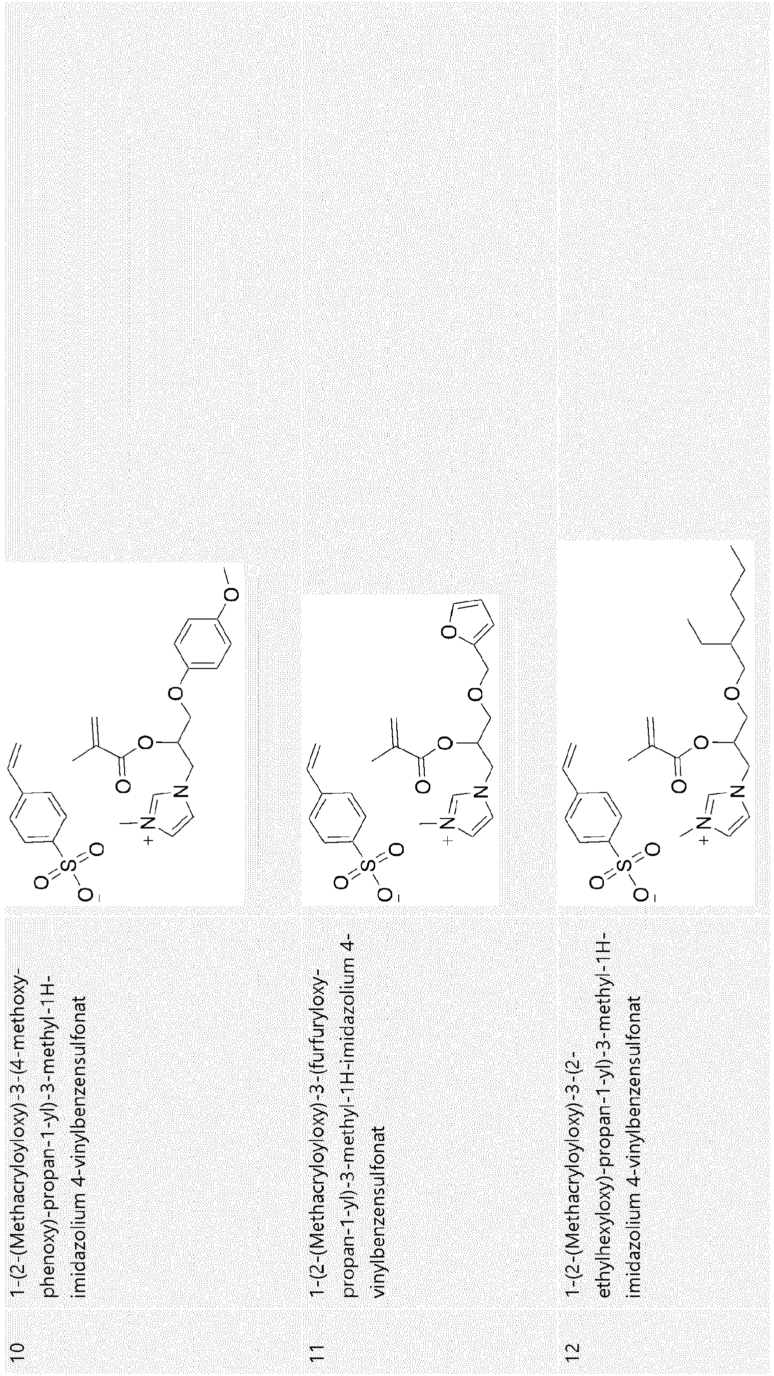

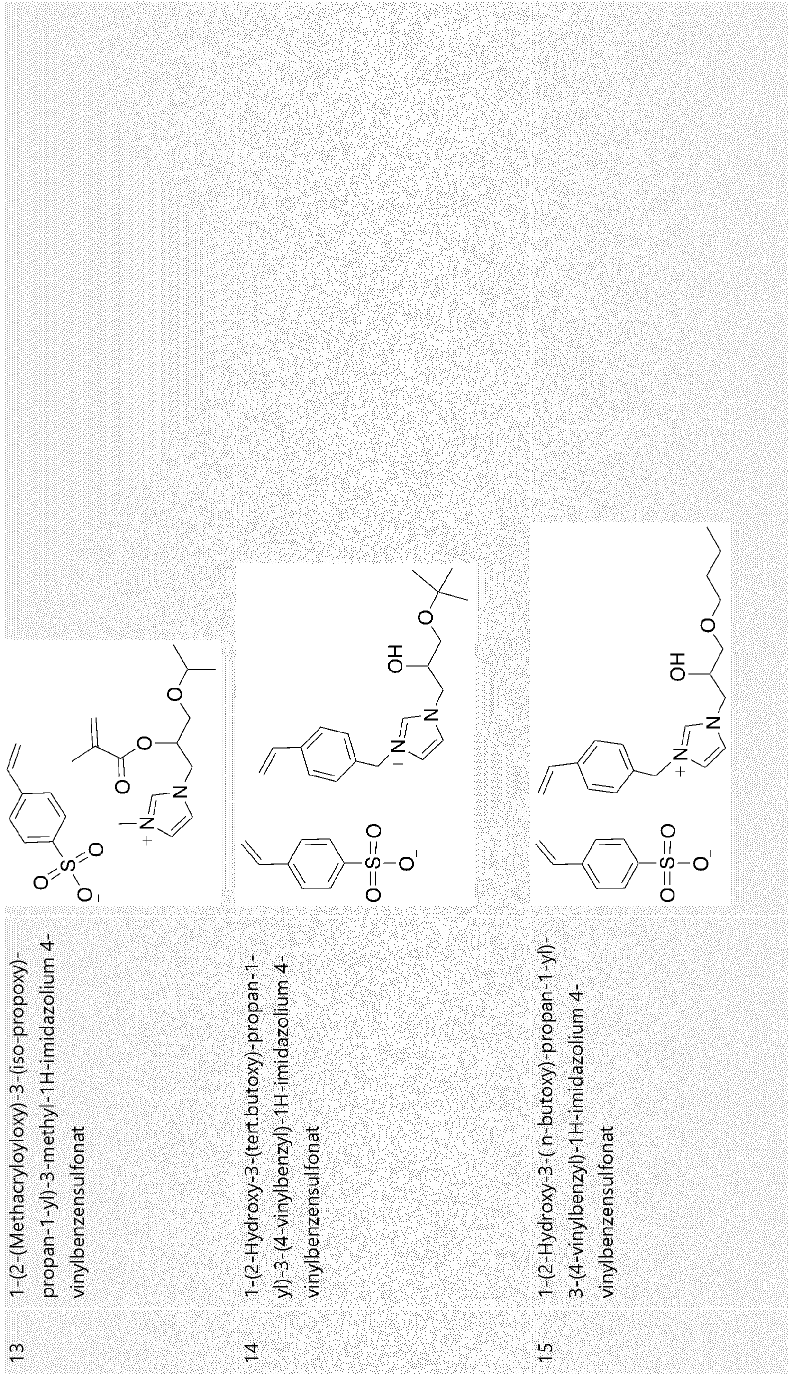

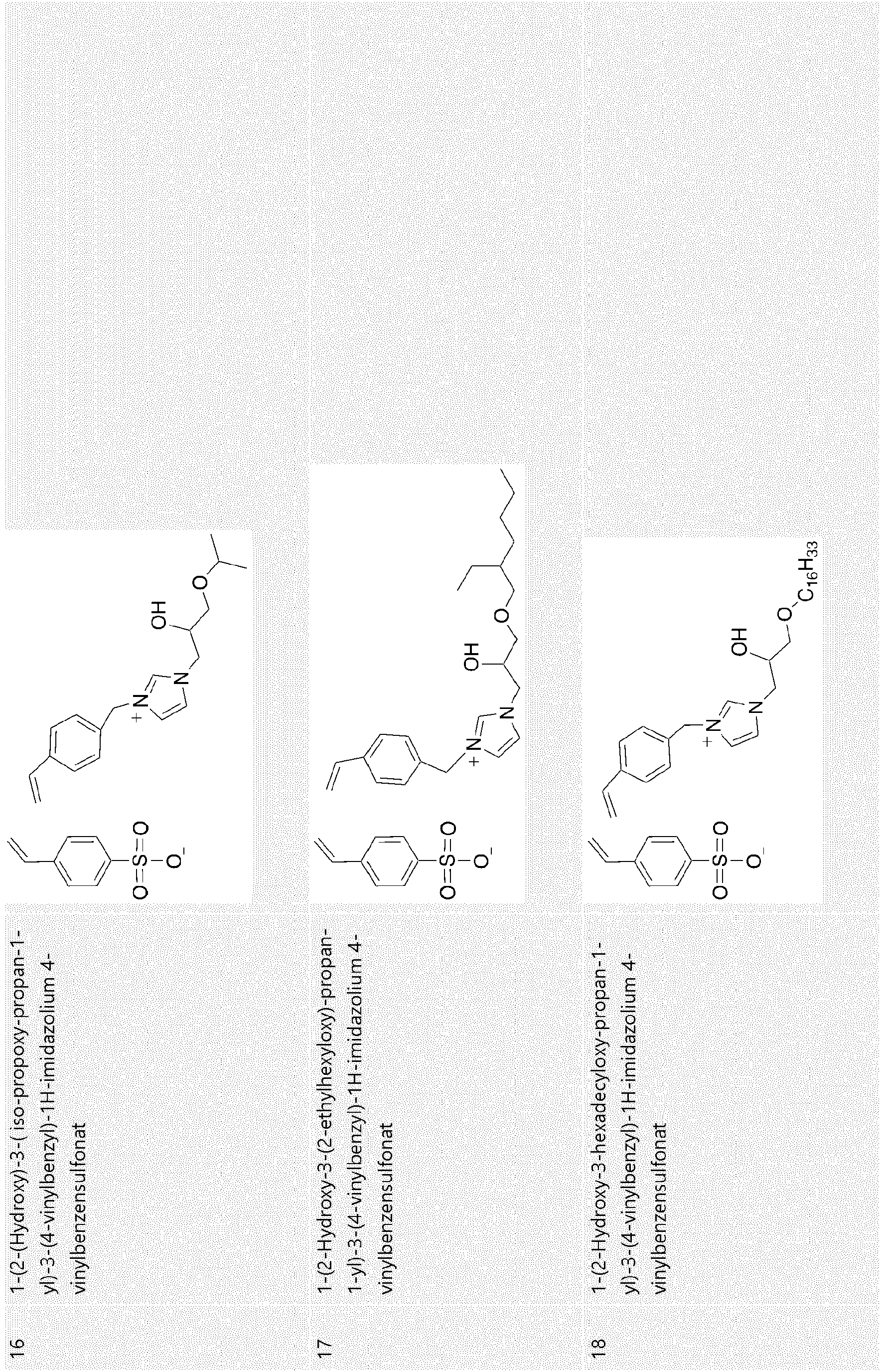

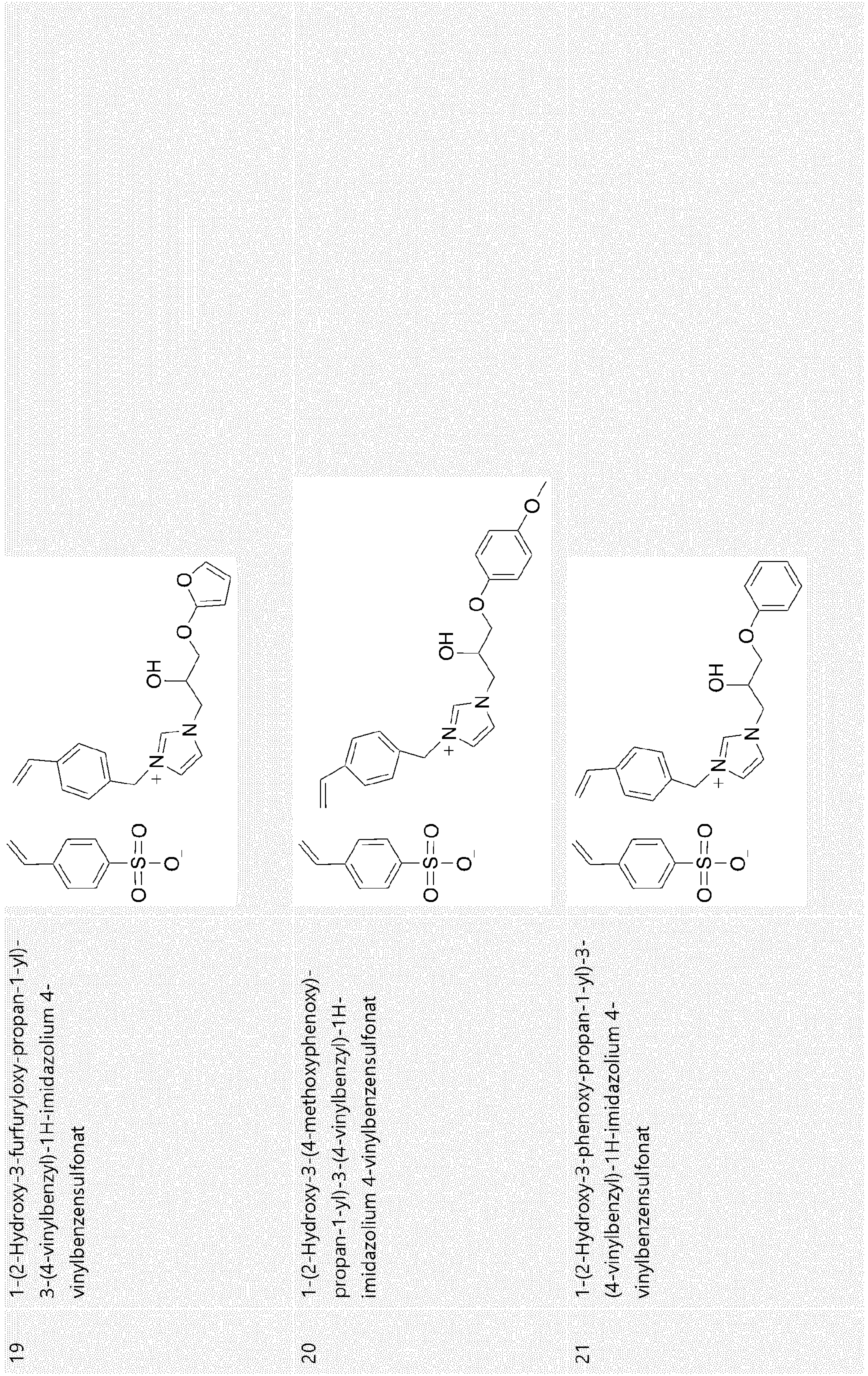

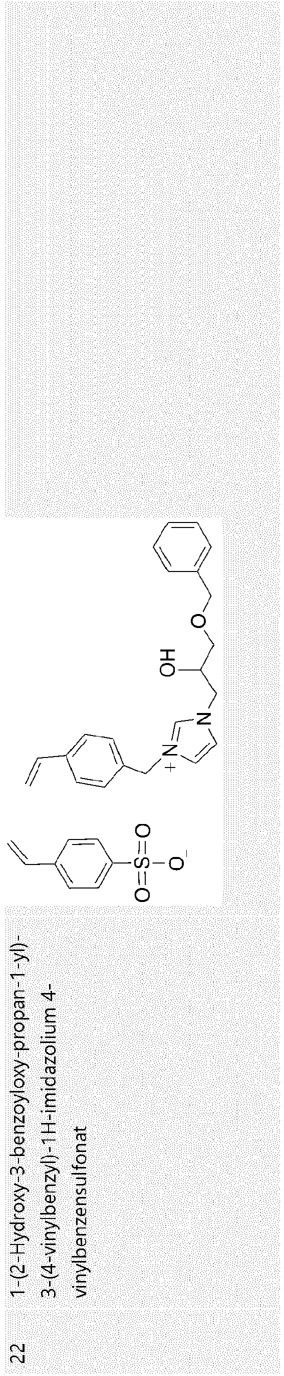

### Zubereitungen

Ein weiterer Gegenstand der vorliegenden Erfindungen betrifft antimikrobielle Zubereitungen. Hierunter sind Endprodukte für die Industrie oder Verbraucher zu verstehen, die über antimikrobielle Eigenschaften verfügen bzw. antimikrobielle Ausrüstung verfügen. Diese werden erfindungsgemäß erhalten, indem man die Additive in die entsprechenden Ausgangsmassen für die Zubereitungen gibt, so dass diese bei der nachfolgenden radikalischen Polymerisation in das Polymer eingebunden werden.

Konkret beansprucht werden Zubereitungen, dadurch erhältlich oder erhalten, dass man
(a) eine radikalisch-polymerisierbare Ausgangsmasse bereit stellt;
(b) ein erfindungsgemäßes Additiv bereit stellt;
(c) das Additiv der Ausgangsmasse in einer wirksamen Menge zusetzt; und
(d) die so erhaltene Mischung einer gemeinsamen radikalischen Polymerisation unterwirft.

Unter einer wirksamen Menge ist eine solche Zugabe an Additiv zu verstehen, die ausreicht, um der durch radikalische Polymerisation erhaltenen Zubereitung die gewünschten antimikrobiellen Eigenschaften zu verleihen. Dabei handelt es sich typisch um Mengen von etwa 0,01 bis etwa 1 Gew.-% und vorzugsweise etwa 0,1 bis 0,5 Gew.-% - bezogen auf die Ausgangsmasse.

Die Natur der Ausgangsmassen, denen man die Additive zusetzt, kann sehr unterschiedlich sein und richtet sich allein nach dem Einsatzzweck. Gemeinsam ist jedoch, dass diese Massen radikalisch polymerisierbar sind, d.h. zumindest anteilmäßig aus Stoffen bestehen, die einer radikalischen Polymerisation zugänglich sind und in deren Rückgrat die anionischen und kationischen Komponenten der erfindungsgemäßen Additive auch eingebaut werden können. Bei diesen Massen handelt es sich in der Regel um Acrylsäure- oder Methacrylsäureverbindungen oder deren Gemische, wie beispielsweise die entsprechenden Säuren, Ester oder Amide. Alternativ können auch Styrol-, Vinyl- oder Maleinsäureverbindungen sowie deren Gemische eingesetzt werden.

Bei den Zubereitungen kann es sich beispielsweise um antimikrobielle Lacke, antimikrobielle Druckfarben oder Anti-Fouling-Beschichtungen handeln, die je nach Anwendung weitere Bestandteile enthalten können. Diese sind dem Fachmann notorisch bekannt und für die Durchführung der erfindungsgemäßen Lehre unkritisch, so dass der Verweis auf das allgemeine Fachwissen hier ausreicht, ohne die Vollständigkeit der Lehre zu beeinträchtigen.

Ebenfalls beansprucht wird ein entsprechendes Verfahren zur Herstellung einer durch radikalische Polymerisation erhaltenen antimikrobiell ausgerüsteten Zubereitung ausgewählt aus der Gruppe, die gebildet wird von antimikrobiellen Lacken, antimikrobiellen Druckfarben und Anti-Fouling Beschichtungen, umfassend oder bestehend aus den folgenden Schritten:
(a) Bereitstellung einer radikalisch-polymerisierbaren Ausgangsmasse;
(b) Bereitstellung eines erfindungsgemäßen Additivs;
(c) Zugabe des Additivs zur Ausgangsmasse in einer wirksamen Menge; und
(d) gemeinsame radikalische Polymerisation der so erhaltenen Masse.

Die Polymerisation kann in der aus dem Stand der Technik hinlänglich bekannten Art und Weise durchgeführt werden, wobei die Reaktion durch einen Starter wie beispielsweise tert.-Butylperoxid oder einen Photoinitiator ausgelöst wird.

Die Zubereitungen können nach der Anwendung, beispielsweise nach der Beschichtung einer Oberfläche noch weiter verfestigt werden, beispielsweise in einem chemischen Trocknungsschritt. Vorzugsweise handelt es sich dabei um eine Bestrahlung mit Licht in einem Wellenlängenbereich von 300 bis 1.000 nm.

### GEWERBLICHE ANWENDBARKEIT

Ein weiterer Gegenstand der Erfindung betrifft die Verwendung der erfindungsgemäßen Additive zur antimikrobiellen Ausrüstung von Zubereitungen, die durch radikalische Polymerisation erhalten werden. Vorzugsweise eignen sich die Additive als Zusätze bei der Herstellung von antimikrobiellen Lacken, antimikrobiellen Druckfarben sowie Anti-Fouling Beschichtungen.

### BEISPIELE

### BEISPIEL 1

### N-Butyl-N'-vinylimidazolium 4-vinylbenzensulfonat

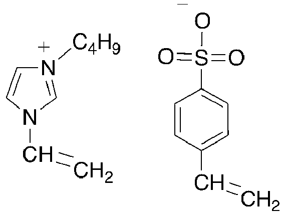

Als Additiv wird *N*-Butyl-*N*'-vinylimidazolium 4-vinylbenzensulfonat (vorzugsweise 5 bis 10 Ma-%) einer mittels Licht härtenden Druckfarbe zugesetzt, welche anschließend mit Licht getrocknet wird, wobei vorzugsweise Bestrahlungszeiten zwischen 10 s und 3 min gewählt werden. Das *N*-Butyl-*N*'-vinylimidazolium 4-vinylbenzensulfonat wird durch Aufschlämmen von Silber-4-vinylbenzensulfonat (12,81 g) in Methanol (28 ml) unter Rühren in einer Argonatmosphäre und tropfenweise Zugabe von *N*-Butyl-*N*'-vinylimidazolium iodid (11,6 g) gelöst in Methanol (22 ml) und anschließendem Rühren unter Argon bei Raumtemperatur für eine Dauer von 3 h hergestellt. Die Suspension wird abgenutscht und der Filterkuchen wir zwei Mal mit kaltem Methanol (jeweils 100 ml) gewaschen. Die klaren farblosen Filtrate werden vereinigt. Durch Entfernen des Lösungsmittels unter Vakuum wird *N*-Butyl-*N*'-vinylimidazolium 4-vinylbenzensulfonat als eine viskose Masse in einer Ausbeute von 99 % erhalten. Das *N*-Butyl-*N'*-vinylimidazolium 4-vinylbenzensulfonat (vorzugsweise 5 bis 10 Ma-%) wird einer mittels Licht härtenden Druckfarbe durch Vermischen zugesetzt. Alternativ kann das *N*-Butyl-*N*'-vinylimidazolium 4-vinylbenzensulfonat auch auf die aufgetragene reine Druckfarbe aufgebracht werden. Anschließend wird die mit *N*-Butyl-*N'-*vinylimidazolium 4-vinylbenzensulfonat versetzte Druckfarbe photonisch getrocknet. Die mit dem Additiv *N*-Butyl-*N*'-vinylimidazolium 4-vinylbenzensulfonat (vorzugsweise 5 bis 10 Ma-%) versehene photonisch getrocknete Druckfarbe zeigt zum Beispiel in einem Certika-Proliferationsassay eine antimikrobielle Wirkung, wobei die Zeit bis zum Erreichen von 50 % der maximalen optischen Dichte im Vergleich zur photonisch getrockneten Druckfarbe ohne Additiv (Referenzprobe) um 31 h (E. coli) bzw. mehr als 23 h (M. luteus) verlängert ist.

### BEISPIEL 2

### 1-(10-Hydroxy- 18-methoxy-18-oxo-octodecan-9-yl)-3-(4-vinylbenzyl)-1H-imidazolium 4-vinylbenzensulfonat und 1-(9-Hydroxy- 18-methoxy- 18-oxo-octadecan-10-yl)-3-(4-vinylbenzyl)-1H-imidazolium 4-vinylbenzensulfonat bzw. eines der beiden Isomeren

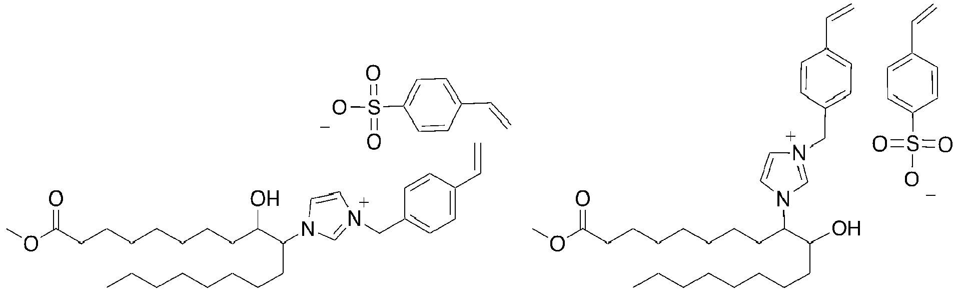

Als Additiv wird ein Gemisch aus 1-(10-Hydroxy-18-methoxy-18-oxo-octadecan-9-yl)-3-(4-vinylbenzyl)-1H-imidazolium 4-vinylbenzensulfonat und 1-(9-Hydroxy-18-methoxy-18-oxo-octadecan-10-yl)-3-(4-vinylbenzyl)-1H-imidazolium 4-vinylbenzensulfonat bzw. eines der beiden Isomeren oder vergleichbaren Verbindungen mit einer variablen Esterstruktur einer mittels Licht härtenden Druckfarbe zugesetzt, welche anschließend mit Licht wie oben beschrieben getrocknet wird. 1-(10-Hydroxy-18-methoxy-18-oxo-octadecan-9-yl)-3-(4-vinylbenzyl)-1H-imidazolium 4-vinylbenzensulfonat bzw. 1-(9-Hydroxy-18-methoxy-18-oxo-octadecan-10-yl)-3-(4-vinylbenzyl)-1H-imidazolium 4-vinylbenzensulfonat oder vergleichbare Verbindungen mit einer variablen Esterstruktur werden durch Umsetzung von Silber-4-vinylbenzensulfonat mit 1-(10-Hydroxy-18-methoxy-18-oxo-octadecan-9-yl)-3-(4-vinylbenzyl)-1H-imidazolium iodid bzw. 1-(9-Hydroxy-18-methoxy-18-oxo-octadecan-10-yl)-3-(4-vinylbenzyl)-1H-imidazolium iodid oder vergleichbaren Verbindungen mit einer variablen Esterstruktur wie oben beschrieben hergestellt. Die Synthese von 1-(10-Hydroxy-18-methoxy-18-oxo-octadecan-9-yl)-3-(4-vinylbenzyl)-1H-imidazolium iodid bzw. 1-(9-Hydroxy-18-methoxy-18-oxo-octadecan-10-yl)-3-(4-vinylbenzyl)-1H-imidazolium iodid ist in ChemistrySelect 4, 2019, 4679-4681 beschrieben. Die mit dem Additiv versehene photonisch getrocknete Druckfarbe zeigt eine antimikrobielle Wirkung.

### BEISPIEL 3

### 1-(10-(Methacry(oy(oxy)-18-methoxy-18-oxo-octadecan-9-yl)-3-benzyl-1H-imidazolium 4-vinylbenzensulfonat und 1-(9-(Methacryloyloxy)-18-methoxy-18-oxo-octodecan-10-yl)-3-benzyl-1H-imidazolium 4-vinylbenzensulfonat bzw. eines der beiden Isomeren

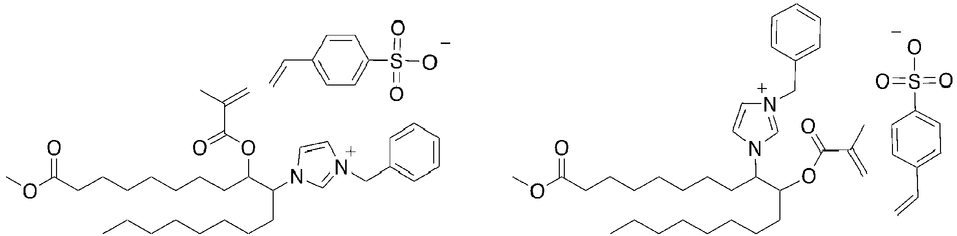

Als Additiv wird ein Gemisch aus 1-(10-(Methacryloyloxy)-18-methoxy-18-oxo-octadecan-9-yl)-3-benzyl-1H-imidazolium 4-vinylbenzensulfonat und 1-(9-(Methacryloyloxy)-18-methoxy-18-oxo-octadecan-10-yl)-3-benzyl-1H-imidazolium 4-vinylbenzensulfonat bzw. eines der beiden Isomeren oder vergleichbaren Verbindungen mit einer variablen Esterstruktur einer mittels Licht härtenden Druckfarbe zugesetzt, welche anschließend mit Licht wie oben beschrieben getrocknet wird. 1-(10-(Methacryloyloxy)-18-methoxy-18-oxo-octadecan-9-yl)-3-benzyl-1H-imidazolium 4-vinylbenzensulfonat bzw. 1-(9-(Methacryloyloxy)-18-methoxy-18-oxo-octadecan-10-yl)-3-benzyl-1H-imidazolium 4-vinylbenzensulfonat oder vergleichbare Verbindungen mit einer variablen Esterstruktur werden durch Umsetzung von Silber-4-vinylbenzensulfonat mit 1-(10-(Methacryloyloxy)-18-methoxy-18-oxo-octadecan-9-yl)-3-benzyl-1H-imidazolium iodid bzw. 1-(9-(Methacryloyloxy)-18-methoxy-18-oxo-octadecan-10-yl)-3-benzyl-1H-imidazolium iodid oder vergleichbaren Verbindungen mit einer variablen Esterstruktur wie oben beschrieben hergestellt. Die Synthese von 1-(10-(Methacryloyloxy)-18-methoxy-18-oxo-octadecan-9-yl)-3-benzyl-1H-imidazolium iodid bzw. 1-(9-(Methacryloyloxy)-18-methoxy-18-oxo-octadecan-10-yl)-3-benzyl-1H-imidazolium iodid ist in ChemistrySelect 4, 2019, 4679-4681 beschrieben. Die mit dem Additiv versehene photonisch getrocknete Druckfarbe zeigt eine antimikrobielle Wirkung.

### BEISPIEL 4

### 1-(10-(Methacry(oy(oxy)-18-methoxy-18-oxo-octadecan-9-yl)-3-methyl-1H-imidazolium 4-vinylbenzensulfonat und 1-(9-(Methacryloyloxy)-18-methoxy-18-oxo-octadecan-10-yl)-3-methyl-1H-imidazolium 4-vinylbenzensulfonat bzw. eines der beiden Isomeren

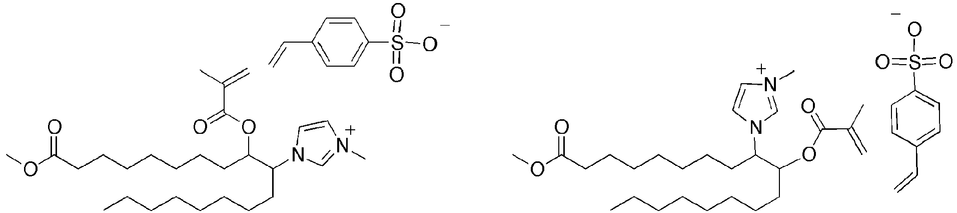

Als Additiv wird ein Gemisch aus 1-(10-(Methacryloyloxy)-18-methoxy-18-oxo-octadecan-9-yl)-3-methyl-1H-imidazolium 4-vinylbenzensulfonat und 1-(9-(Methacryloyloxy)-18-methoxy-18-oxo-octadecan-10-yl)-3-methyl-1H-imidazolium 4-vinylbenzensulfonat bzw. eines der beiden Isomeren oder eine vergleichbare Verbindung mit einer variablen Esterstruktur einer mittels Licht härtenden Druckfarbe zugesetzt, welche anschließend mit Licht wie oben beschrieben getrocknet wird. 1-(10-(Methacryloyloxy)-18-methoxy-18-oxo-octadecan-9-yl)-3-methyl-1H-imidazolium 4-vinylbenzensulfonat bzw. 1-(9-(Methacryloyloxy)-18-methoxy-18-oxo-octadecan-10-yl)-3-methyl-1H-imidazolium 4-vinylbenzensulfonat oder eine vergleichbare Verbindung mit einer variablen Esterstruktur werden durch Umsetzung von Silber-4-vinylbenzensulfonat mit 1-(10-(Methacryloyloxy)-18-methoxy-18-oxo-octadecan-9-yl)-3-methyl-1H-imidazolium iodid bzw. 1-(9-(Methacryloyloxy)-18-methoxy-18-oxo-octadecan-10-yl)-3-methyl-1H-imidazolium iodid oder einer vergleichbaren Verbindung mit einer variablen Esterstruktur wie oben beschrieben hergestellt. Die mit dem Additiv versehene photonisch getrocknete Druckfarbe zeigt eine antimikrobielle Wirkung.

### BEISPIEL 5

### 1-(2-(Methacryloyloxy)-3-tert.butoxy-propan-1-yl)-3-methyl-1H-imidazolium 4-vinylbenzensulfonat

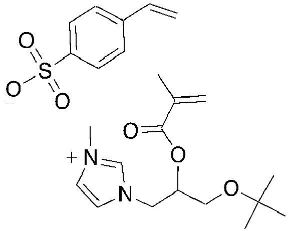

Als Additiv wird 1-(2-(Methacryloyloxy)-3-tert.butoxy-propan-1-yl)-3-methyl-1H-imidazolium 4-vinylbenzensulfonat einer mittels Licht härtenden Druckfarbe zugesetzt, welche anschließend mit Licht wie oben beschrieben getrocknet wird. 1-(2-(Methacryloyloxy)-3-tert.butoxy-propan-1-yl)-3-methyl-1H-imidazolium 4-vinylbenzensulfonat wird durch Umsetzung von Silber-4-vinylbenzensulfonat mit 1-(2-(Methacryloyloxy)-3-tert.butoxy-propan-1-yl)-3-methyl-1H-imidazolium iodid wie oben beschrieben hergestellt. Die mit dem Additiv versehene photonisch getrocknete Druckfarbe zeigt eine antimikrobielle Wirkung.

### BEISPIEL 6

### 1-(2-(Methacryloyloxy)-3-hexadecyloxy-propan-1-yl)-3-methyl-1H-imidazolium 4-vinylbenzensulfonat

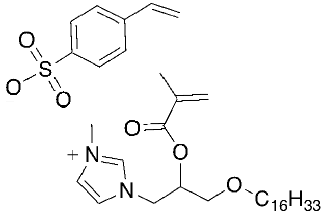

Als Additiv wird 1-(2-(Methacryloyloxy)-3-hexadecyloxy-propan-1-yl)-3-methyl-1H-imidazolium 4-vinylbenzensulfonat einer mittels Licht härtenden Druckfarbe zugesetzt, welche anschließend mit Licht wie oben beschrieben getrocknet wird. 1-(2-(Methacryloyloxy)-3-hexadecyloxy-propan-1-yl)-3-methyl-1H-imidazolium 4-vinylbenzensulfonat wird durch Umsetzung von Silber-4-vinylbenzensulfonat mit 1-(2-(Methacryloyloxy)-3-hexadecyloxy-propan-1-yl)-3-methyl-1H-imidazolium iodid wie oben beschrieben hergestellt. Die mit dem Additiv versehene photonisch getrocknete Druckfarbe zeigt eine antimikrobielle Wirkung.

### BEISPIEL 7

### 1-(2-(Methacryloyloxy)-3-n-butoxy-propan-1-yl)-3-methyl-1H-imidazolium 4-vinylbenzensulfonat

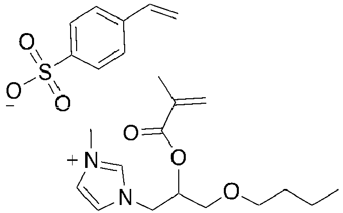

Als Additiv wird 1-(2-(Methacryloyloxy)-3-*n*-butoxy-propan-1-yl)-3-methyl-1H-imidazolium 4-vinylbenzensulfonat einer mittels Licht härtenden Druckfarbe zugesetzt, welche anschließend mit Licht wie oben beschrieben getrocknet wird. 1-(2-(Methacryloyloxy)-3-*n*-butoxy-propan-1-yl)-3-methyl-1H-imidazolium 4-vinylbenzensulfonat wird durch Umsetzung von Silber-4-vinylbenzensulfonat mit 1-(2-(Methacryloyloxy)-3-*n*-butoxy-propan-1-yl)-3-methyl-1H-imidazolium iodid wie oben beschrieben hergestellt. Die mit dem Additiv versehene photonisch getrocknete Druckfarbe zeigt eine antimikrobielle Wirkung.

### BEISPIEL 8

### 1-(2-(Methacryloyloxy)-3-benzyloxy-propan-1-yl)-3-methyl-1H-imidazolium 4-vinylbenzensulfonat

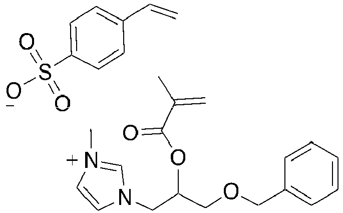

Als Additiv wird 1-(2-(Methacryloyloxy)-3-benzyloxy-propan-1-yl)-3-methyl-1H-imidazolium 4-vinylbenzensulfonat einer mittels Licht härtenden Druckfarbe zugesetzt, welche anschließend mit Licht wie oben beschrieben getrocknet wird. 1-(2-(Methacryloyloxy)-3-benzyloxy-propan-1-yl)-3-methyl-1H-imidazolium 4-vinylbenzensulfonat wird durch Umsetzung von Silber-4-vinylbenzensulfonat mit 1-(2-(Methacryloyloxy)-3-benzyloxy-propan-1-yl)-3-methyl-1H-imidazolium iodid wie oben beschrieben hergestellt. Die mit dem Additiv versehene photonisch getrocknete Druckfarbe zeigt eine antimikrobielle Wirkung.

### BEISPIEL 9

### 1-(2-(Methacryloyloxy)-3- phenoxy-propan-1-yl)-3-methyl-1H-imidazolium 4-vinylbenzensulfonat

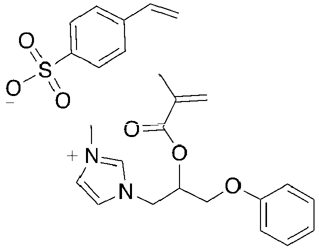

Als Additiv wird 1-(2-(Methacryloyloxy)-3- phenoxy-propan-1-yl)-3-methyl-1H-imidazolium 4-vinylbenzensulfonat einer mittels Licht härtenden Druckfarbe zugesetzt, welche anschließend mit Licht wie oben beschrieben getrocknet wird. 1-(2-(Methacryloyloxy)-3-phenoxy-propan-1-yl)-3-methyl-1H-imidazolium 4-vinylbenzensulfonat wird durch Umsetzung von Silber-4-vinylbenzensulfonat mit 1-(2-(methacryloyloxy)-3- phenoxy-propan-1-yl)-3-methyl-1H-imidazolium iodid wie oben beschrieben hergestellt. Die mit dem Additiv versehene photonisch getrocknete Druckfarbe zeigt eine antimikrobielle Wirkung.

### BEISPIEL 10

### 1-(2-(Methacryloyloxy)-3-(4-methoxy-phenoxy)-propan-1-yl)-3-methyl-1H-imidazolium 4-vinylbenzensulfonat

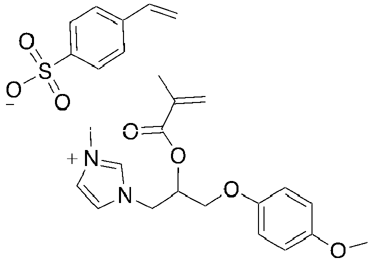

Als Additiv wird 1-(2-(Methacryloyloxy)-3-(4-methoxy-phenoxy)-propan-1-yl)-3-methyl-1H-imidazolium 4-vinylbenzensulfonat einer mittels Licht härtenden Druckfarbe zugesetzt, welche anschließend mit Licht wie oben beschrieben getrocknet wird. 1-(2-(Methacryloyloxy)-3-(4-methoxy-phenoxy)-propan-1-yl)-3-methyl-1H-imidazolium 4-vinylbenzensulfonat wird durch Umsetzung von Silber-4-vinylbenzensulfonat mit 1-(2-(Methacryloyloxy)-3-(4-methoxy-phenoxy)-propan-1-yl)-3-methyl-1H-imidazolium iodid wie oben beschrieben hergestellt. Die mit dem Additiv versehene photonisch getrocknete Druckfarbe zeigt eine antimikrobielle Wirkung.

### BEISPIEL 11

### 1-(2-(Methacryloyloxy)-3-(furfuryloxy-propan-1-yl)-3-methyl-1H-imidazolium 4-vinylbenzensulfonat

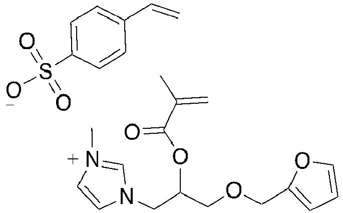

Als Additiv wird 1-(2-(Methacryloyloxy)-3-(furfuryloxy-propan-1-yl)-3-methyl-1H-imidazolium 4-vinylbenzensulfonat einer mittels Licht härtenden Druckfarbe zugesetzt, welche anschließend mit Licht wie oben beschrieben getrocknet wird. 1-(2-(Methacryloyloxy)-3-furfuryloxy-propan-1-yl)-3-methyl-1H-imidazolium 4-vinylbenzensulfonat wird durch Umsetzung von Silber-4-vinylbenzensulfonat mit 1-(2-(Methacryloyloxy)-3-furfuryloxy-propan-1-yl)-3-methyl-1H-imidazolium iodid wie oben beschrieben hergestellt. Die mit dem Additiv versehene photonisch getrocknete Druckfarbe zeigt eine antimikrobielle Wirkung.

### BEISPIEL 12

### 1-(2-(Methacryloyloxy)-3-(2-ethylhexyloxy)-propan-1-yl)-3-methyl-1H-imidazolium 4-vinylbenzensulfonat

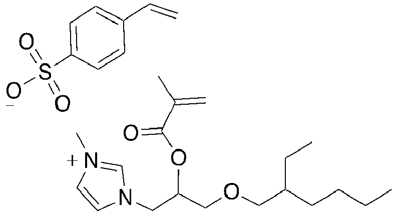

Als Additiv wird 1-(2-(Methacryloyloxy)-3-(2-ethylhexyloxy)-propan-1-yl)-3-methyl-1H-imidazolium 4-vinylbenzensulfonat einer mittels Licht härtenden Druckfarbe zugesetzt, welche anschließend mit Licht wie oben beschrieben getrocknet wird. 1-(2-(Methacryloyloxy)-3-(2-ethylhexyloxy)-propan-1-yl)-3-methyl-1H-imidazolium 4-vinylbenzensulfonat wird durch Umsetzung von Silber-4-vinylbenzensulfonat mit 1-(2-(Methacryloyloxy)-3-(2-ethylhexyloxy-propan-1-yl)-3-methyl-1H-imidazolium iodid wie oben beschrieben hergestellt. Die mit dem Additiv versehene photonisch getrocknete Druckfarbe zeigt eine antimikrobielle Wirkung.

### BEISPIEL 13

### 1-(2-(Methacryloyloxy)-3-(iso-propoxy)-propan-1-yl)-3-methyl-1H-imidazolium 4-vinylbenzensulfonat

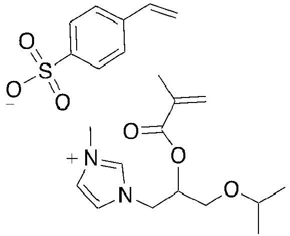

Als Additiv wird 1-(2-(Methacryloyloxy)-3-(iso-propoxy)-propan-1-yl)-3-methyl-1H-imidazolium 4-vinylbenzensulfonat einer mittels Licht härtenden Druckfarbe zugesetzt, welche anschließend mit Licht wie oben beschrieben getrocknet wird. 1-(2-(Methacryloyloxy)-3-(iso-propoxy)-propan-1-yl)-3-methyl-1H-imidazolium 4-vinylbenzensulfonat wird durch Umsetzung von Silber-4-vinylbenzensulfonat mit 1-(2-(Methacryloyloxy)-3-(isopropoxy-propan-1-yl)-3-methyl-1H-imidazolium iodid wie oben beschrieben hergestellt. Die mit dem Additiv versehene photonisch getrocknete Druckfarbe zeigt eine antimikrobielle Wirkung.

### BEISPIEL 14

### 1-(2-Hydroxy-3-(tert.butoxy)-propan-1-yl)-3-(4-vinylbenzyl)-1H-imidazolium 4-vinylbenzensulfonat

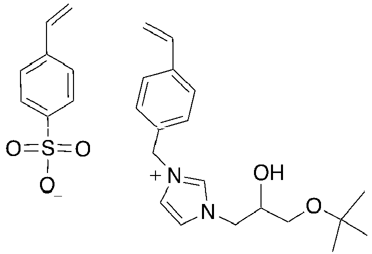

Als Additiv wird 1-(2-Hydroxy-3-(tert.butoxy)-propan-1-yl)-3-(4-vinylbenzyl)-1H-imidazolium 4-vinylbenzensulfonat einer mittels Licht härtenden Druckfarbe zugesetzt, welche anschließend mit Licht wie oben beschrieben getrocknet wird. 1-(2-Hydroxy-3-(tert.butoxy)-propan-1-yl)-3-(4-vinylbenzyl)-1H-imidazolium 4-vinylbenzensulfonat wird durch Umsetzung von Silber-4-vinylbenzensulfonat mit 1-(2-(Hydroxy)-3-(tert.butoxy-propan-1-yl)-3-(4-vinylbenzyl)-1H-imidazolium iodid wie oben beschrieben hergestellt. Die mit dem Additiv versehene photonisch getrocknete Druckfarbe zeigt eine antimikrobielle Wirkung.

### BEISPIEL 15

### 1-(2-Hydroxy-3-( n-butoxy)-propan-1-yl)-3-(4-vinylbenzyl)-1H-imidazolium 4-vinylbenzensulfonat

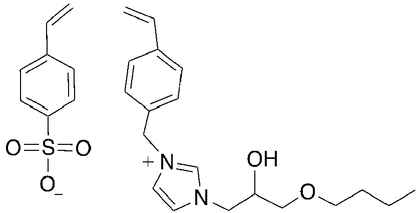

Als Additiv wird 1-(2-Hydroxy-3-( *n*-butoxy)-propan-1-yl)-3-(4-vinylbenzyl)-1H-imidazolium 4-vinylbenzensulfonat einer mittels Licht härtenden Druckfarbe zugesetzt, welche anschließend mit Licht wie oben beschrieben getrocknet wird. 1-(2-Hydroxy-3-(n-butoxy)-propan-1-yl)-3-(4-vinylbenzyl)-1H-imidazolium 4-vinylbenzensulfonat wird durch Umsetzung von Silber-4-vinylbenzensulfonat mit 1-(2-(Hydroxy)-3-(n-butoxy-propan-1-yl)-3-(4-vinylbenzyl)-1H-imidazolium iodid wie oben beschrieben hergestellt. Die mit dem Additiv versehene photonisch getrocknete Druckfarbe zeigt eine antimikrobielle Wirkung.

### BEISPIEL 16

### 1-(2-(Hydroxy)-3-(iso-propoxy-propan-1-yl)-3-(4-vinylbenzyl)-1H-imidazolium 4-vinylbenzensulfonat

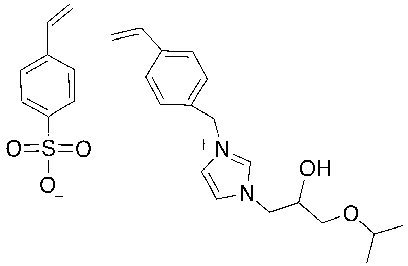

Als Additiv wird 1-(2-(Hydroxy)-3-(*iso*-propoxy-propan-1-yl)-3-(4-vinylbenzyl)-1H-imidazolium 4-vinylbenzensulfonat einer mittels Licht härtenden Druckfarbe zugesetzt, welche anschließend mit Licht wie oben beschrieben getrocknet wird. 1-(2-Hydroxy-3-(*iso-*propoxy-propan-1-yl)-3-(4-vinylbenzyl)-1H-imidazolium 4-vinylbenzensulfonat wird durch Umsetzung von Silber-4-vinylbenzensulfonat mit 1-(2-(Hydroxy)-3-(*n*-butoxy-propan-1-yl)-3-(4-vinylbenzyl)-1H-imidazolium iodid wie oben beschrieben hergestellt. Die mit dem Additiv versehene photonisch getrocknete Druckfarbe zeigt eine antimikrobielle Wirkung.

### BEISPIEL 17

### 1-(2-Hydroxy-3-(2-ethylhexyloxy)-propan-1-yl)-3-(4-vinylbenzyl)-1H-imidazolium 4-vinylbenzensulfonat

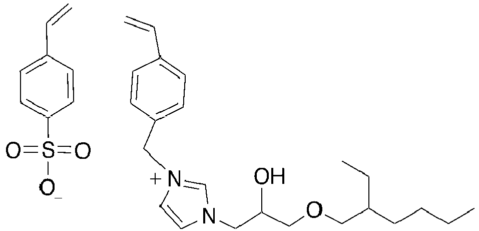

Als Additiv wird 1-(2-Hydroxy-3-(2-ethylhexyloxy)-propan-1-yl)-3-(4-vinylbenzyl)-1H-imidazolium 4-vinylbenzensulfonat einer mittels Licht härtenden Druckfarbe zugesetzt, welche anschließend mit Licht wie oben beschrieben getrocknet wird. 1-(2-(Hydroxy)-3-(2-ethylhexyloxy)-propan-1-yl)-3-(4-vinylbenzyl)-1H-imidazolium 4-vinylbenzensulfonat wird durch Umsetzung von Silber-4-vinylbenzensulfonat mit 1-(2-Hydroxy-3-(2-ethylhexyloxy)-propan-1-yl)-3-(4-vinylbenzyl)-1H-imidazolium iodid wie oben beschrieben hergestellt. Die mit dem Additiv versehene photonisch getrocknete Druckfarbe zeigt eine antimikrobielle Wirkung.

### BEISPIEL 18

### 1-(2-Hydroxy-3-hexadecyloxy-propan-1-yl)-3-(4-vinylbenzyl)- IH-imidazolium 4-vinylbenzensulfonat

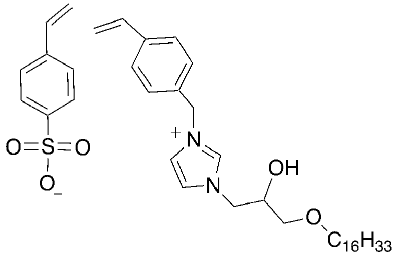

Als Additiv wird 1-(2-Hydroxy-3-hexadecyloxy-propan-1-yl)-3-(4-vinylbenzyl)-1H-imidazolium 4-vinylbenzensulfonat einer mittels Licht härtenden Druckfarbe zugesetzt, welche anschließend mit Licht wie oben beschrieben getrocknet wird. 1-(2-(Hydroxy)-3-hexadecyloxy-propan-1-yl)-3-(4-vinylbenzyl)-1H-imidazolium 4-vinylbenzensulfonat wird durch Umsetzung von Silber-4-vinylbenzensulfonat mit 1-(2-Hydroxy-3-hexadecyloxy-propan-1-yl)-3-(4-vinylbenzyl)-1H-imidazolium iodid wie oben beschrieben hergestellt. Die mit dem Additiv versehene photonisch getrocknete Druckfarbe zeigt eine antimikrobielle Wirkung.

### BEISPIEL 19

### 1-(2-Hydroxy-3-furfuryloxy-propan-1-yl)-3-(4-vinylbenzyl)-1H-imidazolium 4-vinylbenzensulfonat

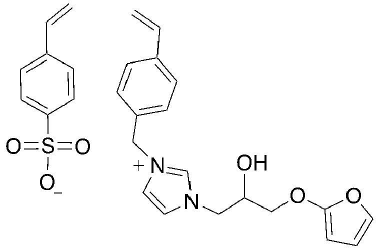

Als Additiv wird 1-(2-Hydroxy-3-furfuryloxy-propan-1-yl)-3-(4-vinylbenzyl)-1H-imidazolium 4-vinylbenzensulfonat einer mittels Licht härtenden Druckfarbe zugesetzt, welche anschließend mit Licht wie oben beschrieben getrocknet wird. 1-(2-(Hydroxy)-3-furfuryloxy-propan-1-yl)-3-(4-vinylbenzyl)-1H-imidazolium 4-vinylbenzensulfonat wird durch Umsetzung von Silber-4-vinylbenzensulfonat mit 1-(2-hydroxy-3-furfuryloxy-propan-1-yl)-3-(4-vinylbenzyl)-1H-imidazolium iodid wie oben beschrieben hergestellt. Die mit dem Additiv versehene photonisch getrocknete Druckfarbe zeigt eine antimikrobielle Wirkung.

### BEISPIEL 20

### 1-(2-Hydroxy-3-(4-methoxyphenoxy)-propan-1-yl)-3-(4-vinylbenzyl)-1H-imidazolium 4-vinylbenzensulfonat

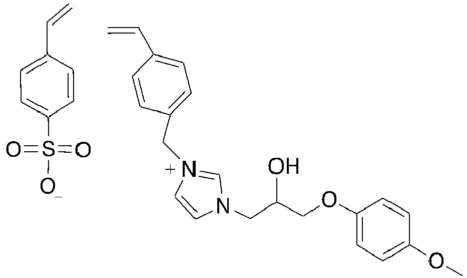

Als Additiv wird 1-(2-Hydroxy-3-(4-methoxyphenoxy)-propan-1-yl)-3-(4-vinylbenzyl)-1H-imidazolium 4-vinylbenzensulfonat einer mittels Licht härtenden Druckfarbe zugesetzt, welche anschließend mit Licht wie oben beschrieben getrocknet wird. 1-(2-(Hydroxy)-3-(4-methoxyphenoxy)-propan-1-yl)-3-(4-vinylbenzyl)-1H-imidazolium 4-vinylbenzensulfonat wird durch Umsetzung von Silber-4-vinylbenzensulfonat mit 1-(2-hydroxy-3-(4-methoxyphenoxy)-propan-1-yl)-3-(4-vinylbenzyl)-1H-imidazolium iodid wie oben beschrieben hergestellt. Die mit dem Additiv versehene photonisch getrocknete Druckfarbe zeigt eine antimikrobielle Wirkung.

### BEISPIEL 21

### 1-(2-Hydroxy-3-phenoxy-propan-1-yl)-3-(4-vinylbenzyl)-1H-imidazolium 4-vinylbenzensulfonat

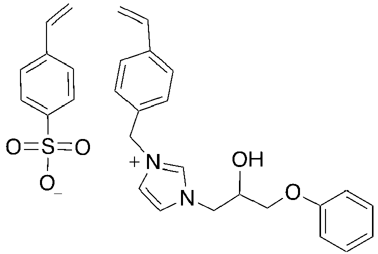

Als Additiv wird 1-(2-Hydroxy-3-phenoxy-propan-1-yl)-3-(4-vinylbenzyl)-1H-imidazolium 4-vinylbenzensulfonat einer mittels Licht härtenden Druckfarbe zugesetzt, welche anschließend mit Licht wie oben beschrieben getrocknet wird. 1-(2-(Hydroxy)-3-phenoxy-propan-1-yl)-3-(4-vinylbenzyl)-1H-imidazolium 4-vinylbenzensulfonat wird durch Umsetzung von Silber-4-vinylbenzensulfonat mit 1-(2-Hydroxy-3-phenoxy-propan-1-yl)-3-(4-vinylbenzyl)-1H-imidazolium iodid wie oben beschrieben hergestellt. Die mit dem Additiv versehene photonisch getrocknete Druckfarbe zeigt eine antimikrobielle Wirkung.

### BEISPIEL 22

### 1-(2-Hydroxy-3-benzoyloxy-propan-1-yl)-3-(4-vinylbenzyl)-1H-imidazolium 4-vinylbenzensulfonat

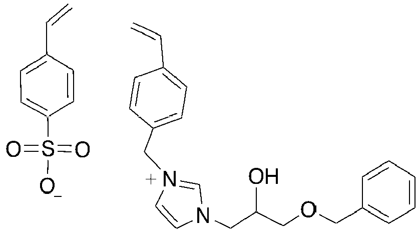

Als Additiv wird 1-(2-Hydroxy-3-benzoyloxy-propan-1-yl)-3-(4-vinylbenzyl)-1H-imidazolium 4-vinylbenzensulfonat einer mittels Licht härtenden Druckfarbe zugesetzt, welche anschließend mit Licht wie oben beschrieben getrocknet wird. 1-(2-(Hydroxy)-3-benzoyloxy-propan-1-yl)-3-(4-vinylbenzyl)-1H-imidazolium 4-vinylbenzensulfonat wird durch Umsetzung von Silber-4-vinylbenzensulfonat mit 1-(2-Hydroxy-3-benzoyloxy-propan-1-yl)-3-(4-vinylbenzyl)-1H-imidazolium iodid wie oben beschrieben hergestellt. Die mit dem Additiv versehene photonisch getrocknete Druckfarbe zeigt eine antimikrobielle Wirkung.

## Patentansprüche

1. Additive enthaltend oder bestehend aus mindestens einem radikalisch polymerisierbaren Kation der Formel (I) und mindestens einem radikalisch polymerisierbaren Anion der Formel (II), 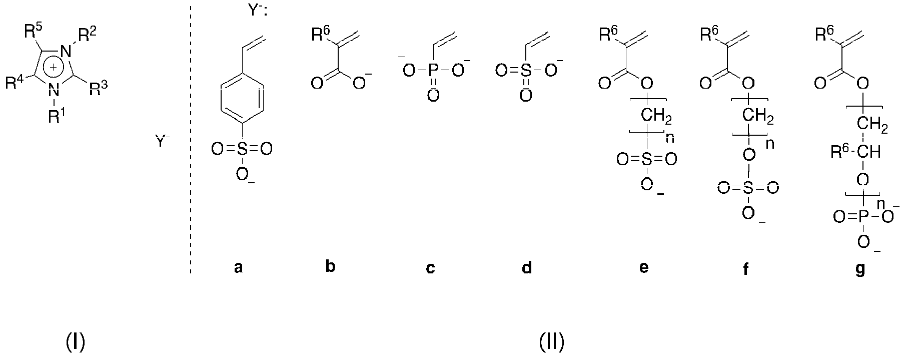 wobei
das polymerisierbare Kation I eine der abgebildeten Strukturen mit den Substituenten R¹-R⁵ oder eine Mischung aus diesen darstellen kann,
das polymerisierbare Anion II mit der generellen Formel Y⁻ eine der abgebildeten Strukturen a bis g oder auch eine Mischung daraus darstellen kann,
und die aufgeführten Substituenten jeweils unabhängig voneinander die folgenden Bedeutungen aufweisen können:
| | |
|---|---|
| R1, R2 | ein linearer oder verzweigter, gesättigter oder ungesättigter, gegebenenfalls durch mindestens eine Hydroxyl-, Carboxyl- und/oder Estergruppe substituierter C₅-C₂₅-Kohlenwasserstoffrest; oder |
| | ein gegebenenfalls mit mindestens einem linearen oder verzweigten, gesättigten oder ungesättigten C₁-C₁₀ Kohlenwasserstoffrest substituierter Phenyl- oder Benzylrest; oder |
| | ein -(CH₂)ₘ₁-COX-(CH₂)ₘ₂-OY-Rest |
| m1, m2 | Zahlen von 1 bis 5 |
| Y | ein linearer oder verzweigter, gesättigter oder ungesättigter C1-C20-Kohlenwasserstoffrest; oder |
| | ein gegebenenfalls mit mindestens einer C₁-C₅-Alkyl- oder Hydroxyalkylgruppe substituierter Phenyl-, Benzyl oder Furfurylrest; |
| R³, R⁴, R⁵ | Wasserstoff oder für einen linearen oder verzweigten C₁-C₁₂- Alkyl- oder Alkylarylrest mit 1 bis12 Kohlenstoffatomen, wobei R⁴ und R⁵ gegebenenfalls ein weiteres aromatisches Ringsystem bilden können. |
| R⁶ | Wasserstoff oder eine Methylgruppe |
| n | Zahlen ab 1 und größer |

2. Additive nach Anspruch 1, **dadurch gekennzeichnet, dass** sie die beiden Komponenten (I) und (II) im molaren Verhältnis von etwa 1:2 bis etwa 2:1 enthalten.

3. Zubereitungen, dadurch erhältlich oder erhalten, dass man
(a) eine radikalisch-polymerisierbare Ausgangsmasse bereit stellt;
(b) ein Additiv nach Anspruch 1 bereit stellt;
(c) das Additiv der Ausgangsmasse in einer wirksamen Menge zusetzt; und
(d) die so erhaltene Mischung einer gemeinsamen radikalischen Polymerisation unterwirft.

4. Zubereitungen nach Anspruch 3, **dadurch gekennzeichnet, dass** man das Additiv der Ausgangsmasse in Mengen von etwa 0,01 bis etwa 10 Gew.-% - bezogen auf die Ausgangsmasse - zusetzt.

5. Zubereitungen nach Anspruch 3, **dadurch gekennzeichnet, dass** es sich um einen antimikrobiellen Lack handelt.

6. Zubereitungen nach Anspruch 3, **dadurch gekennzeichnet, dass** es sich um eine antimikrobielle Druckfarbe handelt.

7. Zubereitungen nach Anspruch 3, **dadurch gekennzeichnet, dass** es sich um eine Anti-Fouling-Beschichtung handelt.

8. Verfahren zur Herstellung von durch radikalische Polymerisation erhaltenen antimikrobiell ausgerüsteten Zubereitungen ausgewählt aus der Gruppe, die gebildet wird von antimikrobiellen Lacken, antimikrobiellen Druckfarben und Anti-Fouling Beschichtungen, umfassend oder bestehend aus den folgenden Schritten:
(a) Bereitstellung einer radikalisch-polymerisierbaren Ausgangsmasse;
(b) Bereitstellung eines Additivs nach Anspruch 1;
(c) Zugabe des Additivs zur Ausgangsmasse in einer wirksamen Menge; und
(d) gemeinsame radikalischen Polymerisation der so erhaltenen Masse.

9. Verfahren nach Anspruch 8, **dadurch gekennzeichnet, dass** man die Zubereitungen nach der Anwendung zur Verfestigung einem chemischen Trocknungsschritt unterwirft.

10. Verwendung der Additive nach Anspruch 1 zur antimikrobiellen Ausrüstung von Zubereitungen, die durch radikalische Polymerisation erhalten werden.
